Europäisches Patentamt

European Patent Office

Office européen des brevets

(11) Numéro de publication : **0 010 006**
**B1**

## (12) FASCICULE DE BREVET EUROPÉEN

(45) Date de publication du fascicule du brevet :
18.01.84

(21) Numéro de dépôt : 79400571.0

(22) Date de dépôt : 14.08.79

(51) Int. Cl.³ : **B 01 D 1/26, F 22 B 1/18**

(54) **Procédé permettant l'utilisation efficace de la chaleur contenue dans des gaz chauds au chauffage d'un évaporateur.**

(30) Priorité : 20.09.78 FR 7826993

(43) Date de publication de la demande :
16.04.80 Bulletin 80/08

(45) Mention de la délivrance du brevet :
18.01.84 Bulletin 84/03

(84) Etats contractants désignés :
AT BE CH DE GB IT LU NL SE

(56) Documents cités :
FR-A- 1 146 887
FR-A- 1 543 961
FR-A- 2 243 713
FR-A- 2 247 132
FR-A- 2 316 566
FR-A- 2 365 359
GB-A- 795 007
US-A- 3 337 421

(73) Titulaire : **APPAREILS ET EVAPORATEURS KESTNER**
**7, rue de Toul**
**F-59003 Lille (FR)**

(72) Inventeur : **Lahousse, Lucien**
**7, rue de Toul**
**F-59003 Lille (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

### Procédé permettant l'utilisation efficace de la chaleur contenue dans des gaz chauds au chauffage d'un évaporateur

L'invention a pour objet un procédé permettant l'utilisation efficace de la chaleur contenue dans des gaz chauds au chauffage d'un évaporateur.

De nombreuses unités de production et en particulier les appareils de séchage rejettent à l'atmosphère des gaz chauds plus ou moins chargés en eau.

L'utilisation de la chaleur potentielle de ces gaz est encore limitée par le fait que les appareils imaginés jusqu'à présent ne permettent qu'une récupération partielle de la chaleur contenue et nécessitent des surfaces d'échange et, par conséquent, un investissement important.

Le brevet français 2.243.713 décrit en particulier une installation de distillation tirant profit de la chaleur perdue d'un haut fourneau et comportant plusieurs étages dans lesquels on produit de la vapeur dans un évaporateur dans lequel circule l'eau à distiller et où celle-ci s'évapore partiellement par condensation de la vapeur provenant de l'étage précédent.

La vapeur surchauffée provenant du haut fourneau traverse l'évaporateur du premier étage et produit de la vapeur par évaporation partielle de l'eau à distiller avant d'être mélangée à la sortie du premier étage avec la vapeur produite. Ce mélange de vapeur alimente ensuite l'évaporateur de l'étage suivant et ainsi de suite.

Une telle installation qui n'est rien d'autre qu'une installation d'évaporation à multiples effets ne permettrait pas sans modification profonde la récupération de la chaleur de gaz chauds résiduaires incompatibles avec la vapeur produite par l'évaporation de l'eau à distiller.

La présente invention a donc pour objet de récupérer la chaleur potentielle de gaz chauds quelle que soit leur nature pour chauffer les évaporateurs d'une installation d'évaporateur à multiples effets.

L'originalité du procédé revendiqué par la demanderesse réside donc dans l'association d'une série d'échangeurs récupérant la chaleur des gaz et d'un évaporateur à multiples effets.

La particularité d'un évaporateur à multiples effets réside dans le fait que les températures d'échange de chaleur vont en décroissant d'un effet au suivant.

L'utilisation de cette particularité permet donc par échange de chaleur entre les gaz à refroidir et les solutions à évaporer de réaliser un transfert méthodique de chaleur entre les gaz à refroidir et les solutions à évaporer.

L'innovation du présent procédé réside dans le fait que dans un premier étage où les gaz sont partiellement refroidis dans un échangeur-évaporateur dans lequel les solutions à concentrer sont partiellement évaporées, on sépare la vapeur d'évaporation à un niveau thermique suffisamment élevé pour que celle-ci puisse être utilisée au chauffage d'un évaporateur à multiples effets.

Tel qu'il est revendiqué, le procédé de l'invention permet la récupération de la chaleur de gaz, notamment de gaz résiduaires, présentant une température de saturation suffisante pour l'évaporation d'une solution à concentrer ; le procédé est tel qu'on réalise un échange thermique entre le gaz et une solution à concentrer dans plusieurs étages successifs d'évaporation, le premier étage d'évaporation produisant de la vapeur par échange thermique entre la solution à concentrer et les gaz résiduaires. Dans chaque étage suivant le premier on produit de la vapeur dans un évaporateur dans lequel circule une solution à concentrer et où celle-ci s'évapore partiellement par condensation de la vapeur provenant de l'étage précédent. Les gaz résiduaires circulent d'un étage à l'autre dans un circuit indépendant du circuit de la vapeur et produisent dans chaque étage de la vapeur supplémentaire par échange thermique avec la solution à concentrer dans l'évaporateur de l'étage concerné.

L'invention concerne également une installation d'évaporation à multiples effets comprenant plusieurs étages successifs dont le premier étage comporte un échangeur de chaleur alimenté en gaz chaud, un séparateur de vapeur, des moyens de circulation pour une solution à concentrer et des moyens pour transférer la vapeur issue dudit séparateur de vapeur à l'étage suivant. Chaque étage suivant comporte un évaporateur, un séparateur de vapeur, des moyens de circulation pour une solution à concentrer par évaporation dans ledit évaporateur et des moyens pour transférer la vapeur issue du séparateur de vapeur jusqu'à l'évaporateur de l'étage suivant afin de s'y condenser en transférant de la chaleur. Chaque étage suivant le premier comprend en outre un échangeur de chaleur alimenté en gaz chaud et capable de produire l'évaporation partielle d'une partie du débit de la solution à concentrer, la vapeur produite étant amenée au séparateur de vapeur de l'étage considéré. Des moyens sont prévus pour la circulation du gaz chaud depuis l'échangeur de chaleur de chaque étage jusqu'à l'échangeur de chaleur de l'étage suivant, ces moyens étant indépendants des moyens de transfert de la vapeur.

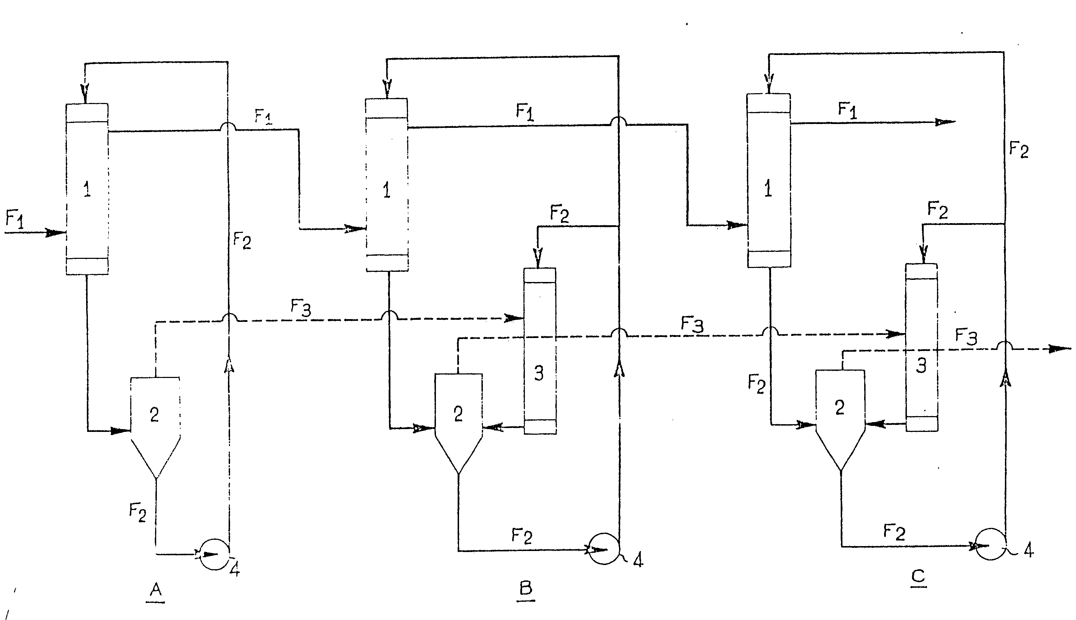

L'invention sera mieux comprise à la lecture de la description non limitative suivante d'un mode de réalisation du présent procédé, en référence au dessin annexé dont la figure unique représente le schéma d'une installation selon l'invention permettant la mise en œuvre dudit procédé.

Cette installation comporte trois étages A, B, C. L'étage A comporte un échangeur 1, un séparateur liquide-vapeur 2 et une pompe de circulation 4, tandis que chaque étage B ou C comporte un échangeur 1, un séparateur liquide-vapeur 2, un évaporateur 3 et une pompe de circulation 4. Les circuits des gaz, de solution à concentrer et de la vapeur d'eau sont fléchés $F_1$, $F_2$, $F_3$, respectivement.

Dans une installation où l'on disposerait de 1 000 kg/h d'air chaud et humide, tel que cet air soit saturé en eau à la température de 80 °C, on pourrait refroidir ces gaz, par échange avec une solution à concentrer, à 59 °C ce qui donnerait un transfert thermique, pour 1 000 kg/h d'air sec, d'environ 261 thermies/heure, qui permettrait l'évaporation sous vide de 460 kg/h d'eau d'une solution à concentrer.

Supposons que l'on réalise le refroidissement du gaz en trois étapes :

a) de 80 à 73 °C
b) de 73 à 66 °C
c) de 66 à 59 °C

On échangerait dans ce cas 129 th/h au premier échangeur, 87 th/h au second et 45 th/h au troisième.

C'est-à-dire que l'on pourrait réaliser une évaporation de 230 kg/h à la sortie du premier échangeur, 154 kg/h à la sortie du second et 80 kg/h à la sortie du troisième.

Toutefois, la vapeur libérée à la sortie du premier échangeur et qui est supposée être à la température de saturation de 64 °C, peut être utilisée à l'évaporation des solutions dans un évaporateur fonctionnant à la température correspondant à celle du deuxième échangeur.

Cet évaporateur produit donc théoriquement une évaporation de 228 kg/h qui vient s'ajouter aux 154 kg/h dégagés au deuxième échangeur.

Ces 382 kg/h de vapeur pourront de la même manière être utilisés dans un évaporateur fonctionnant en parallèle avec le troisième échangeur et permettre une évaporation de 380 kg/h qui s'ajouteront aux 80 kg/h libérés au troisième échangeur.

On aura ainsi une évaporation totale de 1 072 kg/h, c'est-à-dire plus de 2,3 fois l'évaporation initialement escomptée.

Il est clair que l'exemple donné ci-dessus à titre d'illustration peut comporter un nombre plus ou moins grand d'étages d'échange et que la possibilité d'évaporation, pour une source calorifique donnée, sera d'autant plus grande que le nombre d'étages sera plus grand.

On pourra, par exemple, choisir le nombre d'étages en fonction de la quantité d'eau à évaporer par rapport à la quantité de gaz chauds disponibles.

Dans le procédé objet de la présente demande, on aura intérêt à traiter des gaz saturés en humidité pour éviter d'avoir à mettre en œuvre des surfaces d'échange excessives.

Les gaz peuvent être issus d'un séchoir ou de n'importe quel type d'appareil : chaudière, etc.

Ils sont rarement disponibles, saturés en humidité. On aura donc tout intérêt à les saturer par contact direct avec l'eau.

Si ces gaz présentent des éléments corrosifs qui peuvent être préjudiciables à la longévité des échangeurs, on aura intérêt à les mettre au contact d'une solution aqueuse d'un composé qui neutralisera les éléments corrosifs contenus dans ces gaz.

N'importe quel type de laveur de gaz ou d'appareil réalisant un contact convenable entre le gaz et la solution de neutralisation peut être utilisé à cet effet.

## Revendications

1. Procédé de récupération de chaleur de gaz, notamment de gaz résiduaires, présentant une température de saturation suffisante pour l'évaporation d'une solution à concentrer, procédé dans lequel on réalise un échange thermique entre le gaz et la solution à concentrer dans plusieurs étages successifs d'évaporation, le premier étage d'évaporation (A) produisant de la vapeur par échange thermique entre la solution à concentrer et les gaz résiduaires, le procédé comprenant dans chaque étage suivant ledit premier étage, la production de vapeur dans un évaporateur (3) dans lequel circule la solution à concentrer ($F_2$) et où celle-ci s'évapore partiellement par condensation de la vapeur provenant de l'étage précédent, caractérisé par le fait que les gaz circulent d'un étage à l'autre dans un circuit ($F_1$) indépendant du circuit de la vapeur ($F_3$) et produisent dans chaque étage de la vapeur supplémentaire par échange thermique avec la solution à concentrer dans un évaporateur (1) de l'étage concerné.

2. Procédé selon la revendication 1, caractérisé par le fait que l'on réalise au préalable un lavage des gaz résiduaires par une solution aqueuse dont la composition est choisie de façon à diminuer la corrosion dans les appareils du circuit ($F_1$) à l'intérieur desquels circulent ces gaz.

3. Installation d'évaporation à multiples effets comprenant plusieurs étages successifs, le premier étage (A) comportant un échangeur de chaleur (1), alimenté en gaz chaud, un séparateur de vapeur (2), des moyens de circulation (4) d'une solution à concentrer et des moyens ($F_3$) pour transférer la vapeur issue dudit séparateur de vapeur (2) à l'étage suivant, chacun des étages suivants (B, C) comportant un évaporateur (3), un séparateur de vapeur (2), des moyens de circulation (4) d'une solution à concentrer par évaporation dans ledit évaporateur (3) et des moyens ($F_3$) pour transférer la vapeur issue du séparateur de vapeur (2) jusqu'à l'évaporateur (3) de l'étage suivant afin de s'y condenser en transférant de la chaleur, caractérisée par le fait que chaque étage suivant le premier comprend en outre un échangeur de chaleur (1) alimenté en gaz chaud et capable de produire l'évaporation partielle d'une partie du débit de la solution à concentrer, la vapeur produite étant amenée au séparateur de vapeur (2), des moyens ($F_1$) étant prévus pour la circulation du gaz chaud depuis l'échangeur de chaleur de chaque étage jusqu'à l'échangeur de chaleur de l'étage suivant, ces moyens ($F_1$) étant indépendants des moyens de transfert ($F_3$) de la vapeur.

## Claims

1. A method for recovering heat from gases, particularly residual gases, having a sufficiently high saturation temperature to evaporate a solution to be concentrated, in which method heat is exchanged between the gases and the solution to be concentrated in several successive evaporation stages, whith the first evaporation stage (A) producing vapour by exchange of heat between the solution being concentrated and the residual gases, the method comprising, in each stage following the said first stage, production of vapour in an evaporator (3) in which the solution being concentrated is circulated ($F_2$) and in which this solution is partially evaporated by condensation of the vapour coming from the preceding stage, characterized in that the gases flow from one stage to the next in a circuit ($F_1$) independent of the vapour circuit ($F_3$) and produce additional vapour in each stage by heat exchange with the solution to be concentrated in an evaporator (1) of the stage involved.

2. The method according to claim 1, characterized in that the residual gases are washed beforehand by an aqueous solution the composition of which is chosen so as to reduce corrosion in the appliances of circuit ($F_1$) within which these gases circulate.

3. A multiple stage evaporation system comprising several successive stages, the first stage (A) comprising a heat exchanger (1), fed with hot gas, a vapour separator (2), means (4) for circulating a solution to be concentrated and means ($F_3$) for transferring the vapour coming from the said vapour separator (2) to the following stage, with each of the following stages (B, C) comprising an evaporator (3), a vapour separator (2), means (4) for circulating a solution to be concentrated by evaporation in the said evaporator (3) and means ($F_3$) for transferrring the vapour produced by the vapour separator (2) to the evaporator (3) of the next stage so it will condense and transfer heat, characterized in that each stage following the first also comprises a heat exchanger (1) fed with hot gas and capable of producing partial evaporation of part of the throughflow of solution to be concentrated, with the vapour produced being fed to the vapour separator (2), there being means provided for circulation of the hot gas from each stage's heat exchanger to the heat exchanger of the next stage, these means ($F_1$) being separate from the vapour transfer means ($F_3$).

## Ansprüche

1. Verfahren zur Rückgewinnung von Wärme aus Gasen, insbesondere aus Restgasen, die eine Sättigungstemperatur besitzen, die für die Verdampfung einer zu konzentrierenden Lösung ausreicht, wobei ein Wärmeaustausch zwischen dem Gas und der zu konzentrierenden Lösung in mehreren aufeinanderfolgenden Verdampfungsstufen herbeigeführt wird und die erste Verdampfungsstufe (A) Dampf durch Wärmeaustausch zwischen der zu konzentrierenden Lösung und den Restgasen erzeugt, und wobei nach dem Verfahren in jeder auf die erste Stufe folgenden Stufe Dampf in einem Verdampfer (3) erzeugt wird, der von der zu konzentrierenden Lösung ($F_2$) durchlaufen wird und in dem diese teilweise durch Kondensation des aus der vorhergehenden Stufe herangeführten Dampfes verdampft wird, dadurch gekennzeichnet, daß die Gase von einer Stufe zur anderen in einem Kreislauf ($F_1$) strömen, der unabhängig von dem Kreislauf des Dampfes ($F_3$) ist, and daß sie in jeder Stufe zusätzlichen Dampf erzeugen durch Wärmeaustausch mit der zu konzentrierenden Lösung in einem Wärmeaustauscher (1) der betreffenden Stufe.

2. Verfahren nach Anspruch 1, dadurch gekennzeichnet, daß die Restgase zunächst mit einer wäßrigen Lösung gewaschen werden, die so zusammengesetzt ist, daß die Korrosion in den in dem Kreislauf der Gase ($F_1$) liegenden Geräten, die von den Gasen durchströmt werden, so weit wie möglich verringert wird.

3. Mehrfach wirkende Verdampfungsanlage mit mehreren aufeinanderfolgenden Stufen, worin die erste Stufe (A) einen Wärmeaustauscher (1) aufweist, der von heißen Gasen gespeist wird, einen Dampfabscheider (2), ein Umwälzmittel (4) für eine zu konzentrierende Lösung und ein Mittel ($F_3$) zum Übertragen des aus dem Dampfabscheider (2) abgegebenen Dampfes in die folgende Stufe, und wobei jede nachfolgende Stufe (B, C) einen Verdampfer (3), einen Dampfabscheider (2), ein Mittel (4) zum Unwälzen einer in dem Verdampfer (3) durch Verdampfen zu konzentrierenden Lösung und ein Mittel ($F_3$) zum Übertragen des aus dem Dampfabscheider (2) abgegebenen Dampfes bis zu, dem Verdampfer (3) der folgenden Stufe aufweisen, damit der Dampf dort unter Abgabe von Wärme kondensiert, dadurch gekennzeichnet, daß jede auf die erste Stufe folgende Stufe außerdem einen Wärmeaustauscher (1) aufweist, der von Heißgas gespeist wird und die Teilverdampfung einer Teilmenge der zu konzentrierenden Lösung herbeiführt, wobei der erzeugte Dampf des Dampfabscheider (2) zugeführt wird und außerdem ein Mittel ($F_1$) vorgesehen ist, das Heißgas von dem Wärmeaustauscher jeder Stufe bis an den Wärmeaustauscher der folgenden Stufe führt, welches Mittel ($F_1$) unabhängig von dem Mittel ($F_3$) zum Übertragen des Dampfes ist.

F2

F1

F2

F3

3

F2

1

F2

2

C

F2

F3

F1

F2

3

F2

1

F2

2

B

4

F3

F1

F2

F1

F3

F2

1

2

A

F2

4

F1

4